# EUROPÄISCHE PATENTSCHRIFT

(11) **EP 1 270 955 B1**
(45) Veröffentlichungstag und Bekanntmachung des Hinweises auf die Patenterteilung: **18.08.2010**
(21) Anmeldenummer: 02013590.1
(22) Anmeldetag: 20.06.2002
(51) Int. Cl.: F15B 11/036, F15B 15/14, F16F 9/32, F16F 9/36

(54) **Einrichtung zum kraftschlüssigen Fixieren eines Vorschubkolbens an einer Kolbenstange einer Druckmittelzylindereinheit**
Means for frictionally applying a booster piston to a piston rod of a fluid power cylinder
Dispositif pour l'application par frottement d'un piston pilote sur une tige d'un vérin

(30) Priorität: 28.06.2001 DE 10131151
(43) Veröffentlichungstag der Anmeldung: 02.01.2003
(73) Patentinhaber: Rexroth Mecman GmbH, 30453 Hannover (DE)
(72) Erfinder: Möller, Rudolf, Dipl.-Ing., 30989 Gehrden (DE)
(74) Vertreter: Maiwald Patentanwalts GmbH

(56) Entgegenhaltungen:
- DE-A1- 19 938 084
- FR-A- 2 802 597

## Beschreibung

Die vorliegende Erfindung betrifft eine Einrichtung zum kraftschlüssigen Fixieren eines Vorschubkolbens an einer Kolbenstange einer Druckmittelzylindereinheit mittels einer dem Vorschubkolben zugeordneten Klemmeinheit, welche zum Fixieren an der Kolbenstange mit einer nach radial innen wirkenden Klemmkraft beaufschlagbar ist. Eine solche Einrichtung ist aus der DE-A-1 993 8084 bekannt. Weiterhin betrifft die Erfindung einen Schwingungsdämpfer, insbesondere als Rahmendämpfer einer Textilmaschine zum Garnumspulen, mit einer solchen Einrichtung.

Gewöhnlich ist bei Druckmittelzylindereinheiten ein Kolben fest mit einer koaxial hieran angeordneten Kolbenstange verbunden, um über eine Druckbeaufschlagung des Kolbens eine linear gerichtete Kraft zu erzeugen, welche über die Kolbenstange zur Verfügung steht. Hierzu durchdringt die Kolbenstange abgedichtet das Gehäuse der Druckmittelzylindereinheit. Bei einigen Einsatzfällen ist es jedoch gewünscht, dass der Kolben nur dann im vorstehend beschriebenen Sinne mit der Kolbenstange korrespondiert, wenn ein definierter Hub aufzubringen ist; ansonsten soll die Kolbenstange jedoch frei hinund herbewegbar sein.

Es ist allgemein bekannt, zu diesem Zwecke eine Klemmeinheit vorzusehen, welche zum Fixieren des Vorschubkolbens an der Kolbenstange im Bedarfsfall über eine nach radial innen wirkende Klemmkraft beaufschlagbar ist. Die Klemmeinheit ist dabei gewöhnlich nach Art einer Kugelklemmeinheit ausgeführt. Dabei sind Kugelelemente um die Kolbenstange herum angeordnet. Wenn der Vorschubkolben einen Hub ausführt, werden diese Kugeln mittels Keilelementen radial nach innen gegen die Kolbenstange gedrückt, so dass eine kraftschlüssige Verbindung zwischen der Kolbenstange und dem Vorschubkolben entsteht. Nach Herstellung dieser kraftschlüssigen Verbindung wird die Kolbenstange über den weiteren Hubweg des Vorschubkolbens mitgenommen. Die kraftschlüssige Verbindung löst sich infolge der Rückbewegung des Vorschubkolbens selbsttätig. Die Rückbewegung wird gewöhnlich über eine herkömmliche Rückstellfeder vollzogen.

Bei dieser bekannten Klemmeinheit besteht das Problem, dass recht viele Bauteile benötigt werden, um die gewünschte kraftschlüssige Verbindung herzustellen. So sind mehrere Kugelelemente erforderlich sowie ein die Keilwirkung aufbringender gehärteter Konus, der mit den Kugelelementen entsprechend zusammenwirkt. Hierbei sind nur geringe Fertigungstoleranzen zulässig, welches einen erhöhten Fertigungsaufwand zur Folge hat. Ein weiteres Problem besteht darin, dass die mit den Kugelelementen zusammenwirkende Kolbenstange ebenfalls gehärtet ausgeführt sein muss, um eine Beschädigung der Oberfläche der Kolbenstange in Folge der radialen Kraftaufbringung zu vermeiden. Eine solche Beschädigung würde unweigerlich zu Undichtigkeiten an der abgedichteten Austrittsstelle der Kolbenstange aus der Druckmittelzylindereinheit führen.

Es ist daher die Aufgabe der vorliegenden Erfindung eine Einrichtung der vorstehend beschriebenen Art zu schaffen, deren Klemmeinheit wenig Bauteile erfordert und die eine zuverlässige beschädigungsgefahrlose kraftschlüssige Verbindung sicherstellt.

Die Aufgabe wird ausgehend von einer Einrichtung gemäß dem Oberbegriff des Anspruchs 1 in Verbindung mit dessen kennzeichnenden Merkmalen gelöst. Hinsichtlich eines die erfindungsgemäße Einrichtung enthaltenden Schwingungsdämpfers wird die Aufgabe durch den Anspruch 11 gelöst. Die jeweils rückbezogenen abhängigen Ansprüche geben vorteilhafte Weiterbildungen der Erfindung wieder.

Die Erfindung schließt die technische Lehre ein, dass ein spezieller Vorschubkolben einer Druckmittelzylindereinheit eine im Längsschnitt gesehen U-förmig umlaufende Druckkammer aufweist, wobei die Klemmeinheit an einer inneren Flankenseite der Druckkammer des Vorschubkolbens angeordnet ist, um bei Druckmittelbeaufschlagung des Vorschubkolbens gleichzeitig über die U-förmig umlaufende Druckkammer die nach radial innen wirkende Klemmkraft zu erzeugen.

Der Vorteil der erfindungsgemäßen Lösung besteht insbesondere darin, dass zu deren Realisierung nur wenige Bauteile benötigt werden. Eine gehärtete Kolbenstange ist nicht zwingend, da Kugelelemente bei der erfindungsgemäßen Klemmeinheit nicht erforderlich sind. Wegen des erfindungsgemäßen Prinzips der Kraftaufbringung entfällt ebenfalls ein die Keilwirkung aufbringender Konus oder dergleichen. Durch die Summe all dieser Maßnahmen kann eine erhebliche Reduzierung des Fertigungsaufwandes erzielt werden.

Vorzugsweise ist die Klemmeinheit einstückig mit dem Vorschubkolben ausgebildet. Der Vorschubkolben kann dabei aus einem elastomeren Material bestehen, wobei die Klemmeinheit direkt am Vorschubkolben angeformt ist. Als Material zur Herstellung des Vorschubkolbens samt Klemmeinheit eignet sich insbesondere Polyurethan, so dass der die Klemmeinheit umfassende Vorschubkolben in einfacher Weise im Spritzgussverfahren in einem einzigen Fertigungsschritt herstellbar ist.

Gemäß einer weiteren die Erfindung verbessernden Maßnahme besteht die Klemmeinheit im Querschnitt gesehen aus mehreren um die Kolbenstange herum angeordneten Ringsegmenten, die durch dazwischenliegende Ausnehmungen voneinander beabstandet angeordnet sind. Durch die Ausnehmungen wird eine ungehinderte nach radial innen wirkende Klemmbewegung möglich, so dass die Kolbenstange sicher gefasst werden kann. Die direkt mit der Kolbenstange in Kontakt tretende Fläche der Klemmeinheit kann darüber hinaus mit nutförmigen Rillen durchzogen sein, um eine Verdrängung von eventuell an der Kolbenstange haftender Flüssigkeit oder Schmutz zu gewährleisten. Vorzugsweise besteht die Klemmeinheit aus genau vier äquidistant zueinander angeordneten derartigen Ringsegmenten.

Eine andere die Erfindung verbessernde Maßnahme besteht darin, dass der Vorschubkolben im Randbereich direkt in eine außenradiale Dichtlippe ausläuft, die mit dem Gehäuse der Druckmittelzylindereinheit zusammenwirkt, und dass in vergleichbarer Weise der Vorschubkolben eine innenradiale Dichtlippe aufweist, die ebenfalls mit dem Gehäuse der Druckmittelzylindereinheit zusammenwirkt, wobei beide Dichtlippen den Druckraum zur Beaufschlagung des Vorschubkolbens radial begrenzen. Da die beiden Dichtlippen nunmehr integraler Bestandteil des Vorschubkolbens sind, kann auf separate Dichtelemente an dieser Stelle gänzlich verzichtet werden.

Um bei einer Beaufschlagung der U-förmigen Druckkammer die Wirkrichtung der Klemmkraft nach radial innen zu leiten kann der Vorschubkolben im Bereich der U-förmigen Druckkammer von einer Stützhülse umgeben sein. Die Stützhülse dient damit der Einfassung des Vorschubkolbens.

Vorzugsweise ist zur Führung der Kolbenstange im Gehäuse der Druckmittelzylindereinheit ein koaxialer zapfartiger Führungsabschnitt vorgesehen, der sich in Richtung des Gehäuseinneren erstreckt. Dieser zapfenartige Führungsabschnitt woran dann die innenradiale Dichtlippe des Vorschubkolbens zur Anlage kommt, kann dabei direkt vom Vorschubkolben umschlossen werden, um eine platzsparende Anordnung zu erhalten. Bei dieser platzsparenden Anordnung ist es jedoch von Vorteil, wenn der zapfenartige Führungsabschnitt von einem starren Gleitring umgeben ist, der axial verschiebbar mit dem zapfenartigen Führungsabschnitt zusammenwirkt, um die Reibung zwischen dem Vorschubkolben und dem Gehäuse bei einer Axialbewegung des Vorschubkolbens zu minimieren. Ohne Gleitring bestünde die Gefahr, dass Teile der inneren Flankenseite des Vorschubkolbens infolge einer Druckbeaufschlagung der U-förmig umlaufenden Druckkammer eine erhöhte Reibung oder sogar ein Verklemmen des Vorschubkolbens verursachen würden. Es ist denkbar, dass der diese Erscheinung verhindernde starre Gleitring mit der äußeren Stützhülse durch Verbindungsstege eine einzige Baueinheit bildet.

Der in Vorschubrichtung druckmittelbeaufschlagbare Vorschubkolben kann mittels eines Federelements rückgestellt werden. Das Federelement wirkt vorzugsweise zwischen dem Gehäuse der Druckmittelzylindereinheit und der dem Vorschubkolben zugeordneten Stützhülse. Zum Rückstellen ist es jedoch erforderlich, dass zuvor die U-förmige Druckkammer entlüftet wird, um die nach radial innen gerichtete Klemmkraft zuvor aufzuheben. Idealerweise ist die Kraft des rückstellenden Federelements derart an die Funktion der Klemmeinheit angepasst, dass diese sich bei Druckmittelbeaufschlagung der U-förmigen Druckkammer zuerst an die Kolbenstange anlegt, ehe eine das Federelement zusammendrückende Hubbewegung ausgeführt wird. Für das Federelement ist also eine definierte Mindestkraft vorgesehen, um das erfindungsgemäße Klemmprinzip optimal ausführen zu können.

Bevorzugterweise wird die vorstehend beschriebene Einrichtung im Zusammenwirken mit einem Schwingungsdämpfer eingesetzt. Ein Schwingungsdämpfer der hier interessierenden Art weist ein flüssigkeitsgefülltes Dämpferrohr auf, in dem ein Dämpferkolben mit drosselartigen Durchlässen zur Dämpfung axial frei bewegbar geführt ist. Vom Dämpferkolben geht eine Kolbenstange aus, die mit der erfindungsgemäßen Einrichtung zusammenwirkt. Somit kann ein derartig ausgebildeter Schwingungsdämpfer neben der Dämpfungsfunktion für Schwingungen auch eine Hubfunktion ausführen. Somit ist es von besonderem Vorteil, wenn die erfindungsgemäße Einrichtung direkt stirnseitig am Dämpferrohr und benachbart zu einem von der Kolbenstange abgedichtet koaxial durchdrungenen Zylinderdeckel angeordnet ist.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: einen teilweise Längsschnitt eines Schwingungsdämpfers mit einer erfindungsgemäßen Einrichtung zum kraftschlüssigen Fixieren eines Vorschubkolbens an einer Kolbenstange,
- Fig. 2: eine Seitenansicht eines Vorschubkolbens mit Klemmeinheit, welcher in der erfindungsgemäßen Einrichtung zum Einsatz kommt, und
- Fig. 3: eine Draufsicht auf den Vorschubkolben mit Klemmeinheit gemäß Fig. 2.

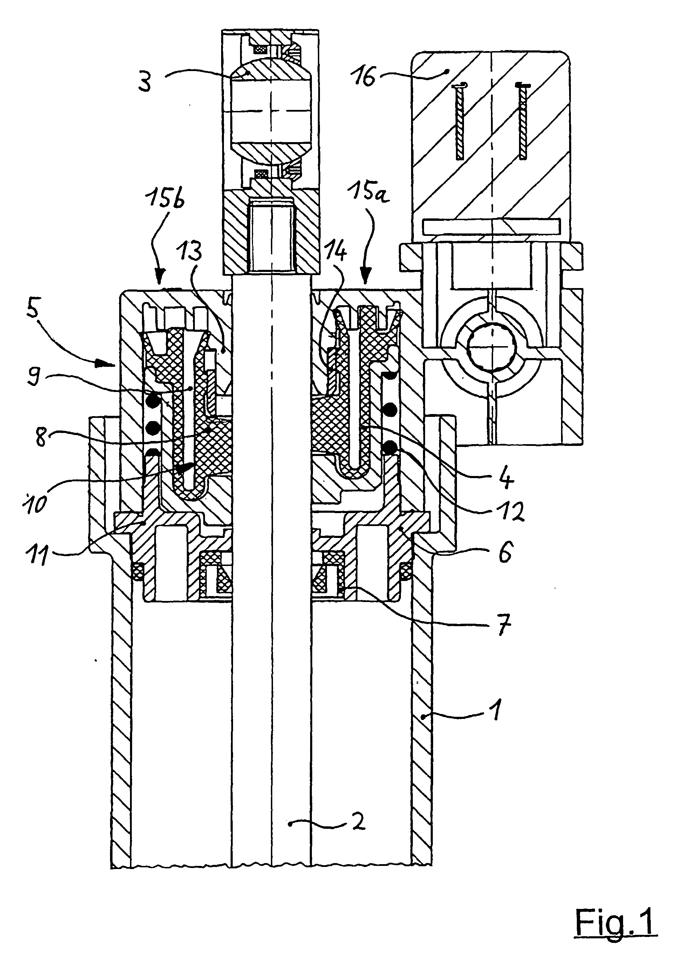

Ein Schwingungsdämpfer gemäß Fig. 1 besteht im wesentlichen aus einem flüssigkeitsbefüllten Dämpferrohr 1 in dem ein - hier nicht weiter gezeigter - Dämpferkolben mit drosselartigen Durchlässen in bekannter Weise zur Dämpfung axial bewegbar geführt ist. Vom Dämpferkolben geht eine Kolbenstange 2 aus, die endseitig mit einem Befestigungsmittel 3 zur Kopplung an - hier nicht weiter dargestellten - Maschinenteilen ausgestattet ist. Die Kolbenstange 2 wirkt in ihrem dem Befestigungsmittel 3 zugewandten Endbereich mit einem Vorschubkolben 4 zusammen, der in einer Druckmittelzylindereinheit 5 untergebracht ist. Die Druckmittelzylindereinheit 5 ist stirnseitig am Dämpferrohr 1 und benachbart zu einem von der Kolbenstange 2 abgedichtet koaxial durchdrungenen Zylinderdeckel 6 angeordnet. Zur Abdichtung ist im Zylinderdeckel 6 ein Dichtring 7 vorgesehen, so dass ein Austritt von Dämpferflüssigkeit aus dem Dämpferrohr 1 vermieden wird.

Ein Fixieren des Vorschubkolbens 4 an der Kolbenstange 2 der Druckmittelzylindereinheit 5 erfolgt mittels einer dem Vorschubkolben 4 zugeordneten Klemmeinheit 8. Die Klemmeinheit 8 ist einstückig mit dem Vorschubkolben 4 ausgebildet und besteht in diesem Ausführungsbeispiel aus Polyurethan. Der Vorschubkolben 4 weist weiterhin eine im Längsschnitt gesehen U-förmig umlaufende Druckkammer 9 auf. Die Druckkammer 9 dient der Aufbringung einer nach radial innen gerichteten Klemmkraft für die Klemmeinheit 8, welche insoweit an einer inneren Flankenseite 10 der Druckkammer 9 angeordnet ist. Der Vorschubkolben 4 ist im Bereich der U-förmigen Druckkammer 9 von einer Stützhülse 11 umgeben, um eine Einfassung für den Vorschubkolben 4 zu bilden und die bei einer Druckmittelbeaufschlagung erzeugte Kraft gezielt auf die Klemmeinheit 8 zu leiten. Zwischen dem Zylinderdeckel 6, der neben einem Verschließen des Dämpferrohrs 1 auch eine stirnseitige Begrenzung der Druckmittelzylindereinheit 5 bildet einerseits sowie der dem Vorschubkolben 4 zugeordneten Stützhülse 11 andererseits ist ein Federelement 12 nach Art ein Spiraldruckfeder angeordnet. Ein der Führung der Kolbenstange 2 dienender zapfenartiger Führungsabschnitt 13 des Gehäuses der Druckmittelzylindereinheit 5 ist mit einem starren Gleitring 14 versehen, der axial bewegbar auf den zapfenartigen Führungsabschnitt 13 aufgeschoben ist und an dem andererseits ein Teil des Flankenbereichs 10 des Vorschubkolbens 4 zur Anlage kommt. Der Gleitring 14 dient einer Reibungsminimierung zwischen dem Vorschubkolben 4 und dem Gehäuse der Druckmittelzylindereinheit 5 bei einer Axialbewegung des Vorschubkolbens 4.

Der rechtsseitig der Kolbenstange 2 gelegene Figurausschnitt 15a zeigt den Vorschubkolben 4 in seiner Ausgangsposition, wogegen der linksseitig der Kolbenstange 2 gelegene Figurausschnitt 15b den Vorschubkolben 4 in seiner Endposition darstellt. Der sich in der Ausgangsposition befindende Vorschubkolben 4 wird über ein elektrisch ansteuerbares Ventil 16 mit Druckmittel beaufschlagt. Zunächst baut sich innerhalb der Druckkammer 9 ein Druck gegen das Federelement 12 auf. Während dieser Phase baucht sich die Druckkammer 9 zu der nicht gestützten Flankenseite 10 hin, an der die Klemmeinheit 8 angeformt ist, auf, so dass die Klemmeinheit 8 eine kraftschlüssige Verbindung mit der Kolbenstange 2 eingeht. Nachdem durch weiteren Druckaufbau innerhalb der Druckkammer 9 eine genügend hohe Vorschubkraft vorhanden ist, welche die entgegenstehende vom Federelement 12 ausgeübte Rückstellkraft überwindet, erfolgt eine Bewegung des Vorschubkolbens 4 samt der Kolbenstange 2. Nach Entlüften der Druckkammer 9 über das Ventil 16 erfolgt unter Wirkung des Federelements 12 eine Rückstellung des Vorschubkolbens 4.

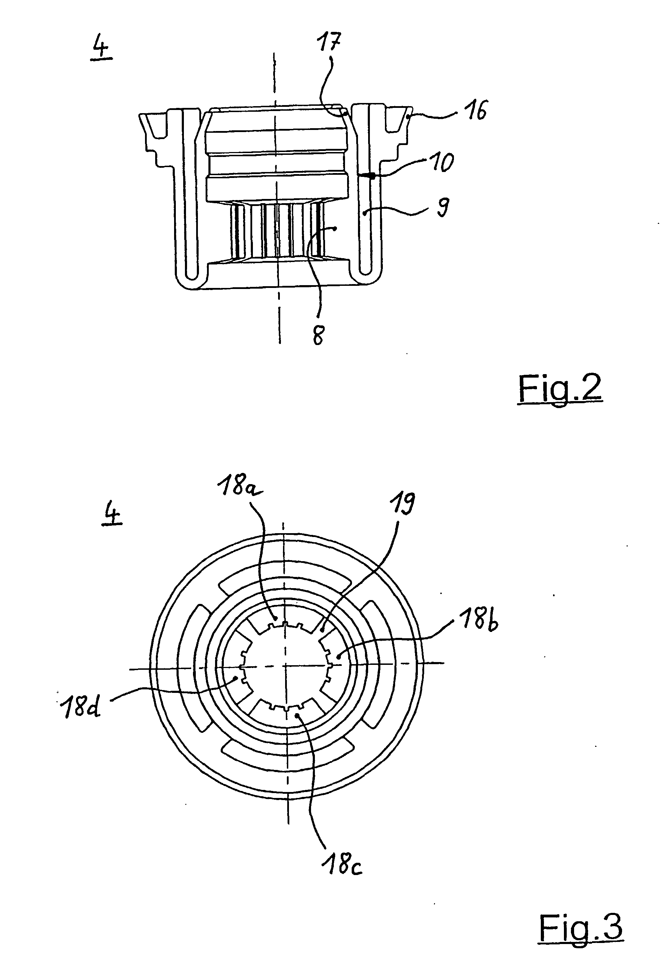

Nach Fig. 2 ist der Vorschubkolben 4 im oberen Randbereich mit einer außenradialen Dichtlippe 16 versehen, die direkt - ebenso wie die Klemmeinheit 8 - am Vorschubkolben 4 angeformt ist. Daneben weist der Vorschubkolben 4 eine innenradiale Dichtlippe 17 auf. Beide Dichtlippen 16 und 17 begrenzen den zur Bewegung des Vorschubkolbens 4 erforderlichen ringförmigen Druckraum und kommen zu diesem Zwecke am - hier nicht weiter gezeigten - Gehäuse der Druckmittelzylindereinheit 5 zur Anlage.

Wie aus der Fig. 3 ersichtlich ist, besteht die Klemmeinheit 8 des Vorschubkolbens 4 im Querschnitt gesehen aus mehreren um die - hier nicht weiter dargestellte - Kolbenstange 2 herum angeordneten Ringsegmenten 18a bis 18d, die durch jeweils dazwischenliegende Ausnehmungen 19 voneinander beabstandet angeordnet sind, um eine nach radial innen gerichtete Klemmbewegung der insoweit segmentiert ausgebildeten Klemmeinheit zu ermöglichen. In diesem Ausführungsbeispiel besteht die Klemmeinheit aus genau vier äquidistant zueinander angeordneten Ringsegmenten 18a bis 18d.

Durch die erfindungsgemäß ausgebildete Klemmeinheit ist im Zusammenwirken mit den wenigen peripheren Bauteilen ein zuverlässiges Fixieren eines Vorschubkolbens an einer Kolbenstange darstellbar, was insbesondere im Zusammenwirken mit Schwingungsdämpfern aber auch anderen Maschinenelementen Anwendung finden kann.

### Bezugszeichenliste

- **1**: Dämpferrohr
- **2**: Kolbenstange
- **3**: Befestigungsmittel
- **4**: Vorschubkolben
- **5**: Druckmittelzylindereinheit
- **6**: Zylinderdeckel
- **7**: Dichtring
- **8**: Klemmeinheit
- **9**: Druckkammer
- **10**: Flankenseite
- **11**: Stützhülse
- **12**: Federelement
- **13**: Führungsabschnitt
- **14**: Gleitring
- **15**: Figurausschnitt
- **16**: Dichtlippe, außenradial
- **17**: Dichtlippe, innenradial
- **18**: Ringsegment
- **19**: Ausnehmung

## Patentansprüche

1. Einrichtung zum kraftschlüssigen Fixieren eines Vorschubkolbens (4) an einer Kolbenstange (2) einer Druckmittelzylindereinheit (5) mittels einer dem Vorschubkolben (4) zugeordneten Klemmeinheit (8), welche zum Fixieren an der Kolbenstange (2) über eine nach radial innen wirkende Klemmkraft beaufschlagbar ist,
**dadurch gekennzeichnet, dass** der Vorschubkolben (4) eine im Längsschnitt gesehen U-förmig umlaufende Druckkammer (9) aufweist, wobei die Klemmeinheit (8) an einer inneren Flankenseite (10) der Druckkammer (9) des Vorschubkolbens (4) angeordnet ist, um bei Druckmittelbeaufschlagung des Vorschubkolbens (4) gleichzeitig über die U-förmig umlaufende Druckkammer (9) die nach radial innen wirkende Klemmkraft zu erzeugen.

2. Einrichtung nach Anspruch 1,
**dadurch gekennzeichnet, dass** die Klemmeinheit (8) einstückig mit dem Vorschubkolben (4) ausgebildet ist.

3. Einrichtung nach Anspruch 2,
**dadurch gekennzeichnet, dass** der Vorschubkolben (4) aus einem elastomeren Material besteht, wobei die Klemmeinheit (8) direkt am Vorschubkolben (4) angeformt ist.

4. Einrichtung nach Anspruch 3,
**dadurch gekennzeichnet, dass** der Vorschubkolben (4) samt Klemmeinheit (8) aus Polyurethan besteht und im Spritzgussverfahren hergestellt ist.

5. Einrichtung nach einem der vorstehenden Ansprüche,
**dadurch gekennzeichnet, dass** die Klemmeinheit (8) im Querschnitt gesehen aus mehreren um die Kolbenstange (2) herum angeordneten Ringsegmenten (18a, 18b, 18c, 18d) besteht, die durch dazwischenliegende Ausnehmungen (19) voneinander beabstandet angeordnet sind.

6. Einrichtung nach Anspruch 4,
**dadurch gekennzeichnet, dass** die Klemmeinheit (8) aus genau vier äquidistant zueinander angeordneten Ringsegmenten (18a, 18b, 18c, 18d) besteht.

7. Einrichtung nach einem der vorstehenden Ansprüche,
**dadurch gekennzeichnet, dass** der Vorschubkolben (4) im Randbereich in eine außenradiale Dichtlippe (16) ausläuft, die mit dem Gehäuse der Druckmittelzylindereinheit (5) zusammenwirkt, und dass der Vorschubkolben (4) eine innenradiale Dichtlippe (17) aufweist, die ebenfalls mit dem Gehäuse der Druckmittelzylindereinheit (5) zusammenwirkt, wobei beide Dichtlippen (16,17) den Druckraum zur Beaufschlagung des Vorschubkolbens (4) radial begrenzen.

8. Einrichtung nach einem der vorstehenden Ansprüche,
**dadurch gekennzeichnet, dass** der Vorschubkolben (4) im Bereich der U-förmigen Druckkammer (8) von einer Stützhülse (11) umgeben ist, um bei einer Beaufschlagung der U-förmigen Druckkammer (8) die Wirkrichtung der Klemmkraft nach radial innen zu leiten.

9. Einrichtung nach einem der vorstehenden Ansprüche,
**dadurch gekennzeichnet, dass** ein der Führung der Kolbenstange (2) dienender zapfenartiger Führungsabschnitt (13) des Gehäuses der Druckmittelzylindereinheit (5) mit einem starren Gleitring (14) versehen ist, um die Reibung zwischen dem Vorschubkolben (4) und dem Gehäuse der Druckmittelzylindereinheit (5) bei einer Axialbewegung des Vorschubkolbens (4) zu minimieren.

10. Einrichtung nach einem der vorstehenden Ansprüche,
**dadurch gekennzeichnet, dass** der in Vorschubrichtung druckmittelbeaufschlagbare Vorschubkolben (4) mittels eines Federelements (12) rückstellbar ist, das zwischen der Druckmittelzylindereinheit (5) und der dem Vorschubkolben (4) zugeordneten Stützhülse (11) wirkt.

11. Schwingungsdämpfer, insbesondere als Rahmendämpfer einer Textilmaschine zum Gamumspulen, mit einem flüssigkeitsbefüllten Dämpferrohr (1), in dem ein Dämpferkolben mit drosselartigen Durchlässen zur Dämpfung axial bewegbar geführt ist und von dem aus eine Kolbenstange (2) ausgeht, die mit einer Einrichtung nach einem der vorstehenden Ansprüche zusammenwirkt.

12. Schwingungsdämpfer nach Anspruch 10,
**dadurch gekennzeichnet, dass** die Druckmittelzylindereinheit (5) stirnseitig am Dämpferrohr (1) und benachbart zu einem von der Kolbenstange (2) abgedichtet koaxial durchdrungen Zylinderdeckel (6) angeordnet ist.

## Claims

1. An apparatus for frictionally fixing a feed piston (4) on a piston rod (2) of a pressurized-medium cylinder unit (5) by means of a clamping unit (8) associated with the feed piston (4), to which a radially-inwardly-acting clamping force can be applied for fixing on the piston rod (2), **characterised in that** the feed piston (4) has a U-shaped peripheral pressure chamber (9) as seen in a longitudinal section, wherein the clamping unit (8) is arranged on an inner flanking side wall (10) of the pressure chamber (9) of the feed piston (4) in order to generate a radially-inwardly-acting clamping force via the U-shaped peripheral pressure chamber (9) at the same time as a pressurized medium is applied to the feed piston (4).

2. The apparatus according to claim 1,
**characterised in that** the clamping unit (8) is integrally formed with the feed piston (4).

3. The apparatus according to claim 2,
**characterised in that** the feed piston (4) is of an elastomeric material, wherein the clamping unit (8) is directly formed on the feed piston (4).

4. The apparatus according to claim 3,
**characterised in that** the feed piston (4), together with the clamping unit (8), is of polyurethane and made by an injection molding method.

5. The apparatus according to any one of the preceding claims,
**characterised in that** the clamping unit (8) consists of a plurality of ring segments (18a, 18b, 18c, 18d) arranged around the piston rod (2), as seen in cross-section, arranged in a spaced relationship by interposed spaces (19).

6. The apparatus according to claim 4,
**characterised in that** the clamping unit (8) consists of exactly four equidistantly arranged ring segments (18a, 18b, 18c, 18d).

7. The apparatus according to any one of the preceding claims,
**characterised in that** the feed piston (4), in its edge area, converges to an radially outer sealing lip (16), which cooperates with the housing of the pressurized-medium cylinder unit (5), and **in that** the feed piston (4) has an radially inner sealing lip (17), also cooperating with the housing of the pressurized-medium cylinder unit (5), wherein the two sealing lips (16, 17) radially limit the pressure chamber to pressurize the feed piston (4).

8. The apparatus according to any one of the preceding claims,
**characterised in that** the feed piston (4), in the area of the U-shaped pressure chamber (9), is surrounded by a support sleeve (11) to guide the effective direction of the clamping force radially to the inside when the U-shaped pressure chamber (9) is pressurized.

9. The apparatus according to any one of the preceding claims,
**characterised in that** a stud-like guiding section (13) of the housing of the pressurized-medium cylinder unit (5), serving to guide the piston rod (2), is provided with a rigid sliding ring (14) to minimize the friction between the feed piston (4) and the housing of the pressurized-medium cylinder unit (5) when the feed piston (4) is axially moved.

10. The apparatus according to any one of the preceding claims,
**characterised in that** the feed piston (4), to which a pressurized medium can be applied in the feed direction, is resettable by means of a spring element (12) acting between the pressurized-medium cylinder unit (5) and the supporting sleeve (11) associated with the feed piston (4).

11. A vibration damper, in particular as a frame damper of a textile machine for rewinding yarn, comprising a liquid-filled damper tube (1), in which a damper piston with throttle-like passages for damping is guided in an axially moveable fashion, and from which a piston rod (2) extends, which cooperates with an apparatus according to any one of the preceding claims.

12. The vibration damper according to claim 10,
**characterised in that** the pressurized-medium cylinder unit (5) is arranged on the end face of the damper tube (1) and adjacent to a cylinder cap (6) through which the piston rod (2) coaxially extends in a sealed fashion.

## Revendications

1. Système pour la fixation d'un piston pilote (4) par coopération de forces sur une tige de piston (2) d'une unité de vérin à fluide sous pression (5) au moyen d'une unité de serrage (8) associée au piston pilote (4), laquelle est susceptible d'être attaquée, pour la fixation sur la tige de piston (2), via une force de serrage agissant radialement vers l'intérieur,
**caractérisé en ce que** le piston pilote (4) comporte une chambre de pression (9) périphérique en forme de U vue en coupe longitudinale, l'unité de serrage (8) étant agencée sur un côté de flanc intérieur (10) de la chambre de pression (9) du piston pilote (4), afin d'engendrer, lors de l'attaque du piston pilote (4) par le fluide sous pression, simultanément la force de serrage agissant radialement vers l'intérieur via la chambre de pression périphérique en forme de U (9).

2. Système selon la revendication 1,
**caractérisé en ce que** l'unité de serrage (8) est réalisée d'un seul tenant avec le piston pilote (4).

3. Système selon la revendication 2,
**caractérisé en ce que** le piston pilote (4) est en un matériau élastomère, et l'unité de serrage (8) est conformée directement sur le piston pilote (4).

4. Système selon la revendication 3,
**caractérisé en ce que** le piston pilote (4), y compris l'unité de serrage (8), est en polyuréthane et est fabriqué dans un procédé de moulage-injection.

5. Système selon l'une des revendications précédentes,
**caractérisé en ce que** l'unité de serrage (8) est composée, vue en coupe transversale, de plusieurs segments annulaires (18a, 18b, 18c, 18d) agencés tout autour de la tige de piston (2), qui sont agencés avec écartement les uns des autres par des évidements (19) interposés.

6. Système selon la revendication 4,
**caractérisé en ce que** l'unité de serrage (8) est composée exactement de quatre segments annulaires (18a, 18b, 18c, 18d) agencés équidistants les uns des autres.

7. Système selon l'une des revendications précédentes,
**caractérisé en ce que** le piston pilote (4) se termine dans la zone de bordure en une lèvre d'étanchéité radiale extérieure (16) qui coopère avec le boîtier de l'unité de vérin à fluide sous pression (5), et **en ce que** le piston pilote (4) comporte une lèvre d'étanchéité radiale intérieure (17) qui coopère également avec le boîtier de l'unité de vérin à fluide sous pression (5), les deux lèvres d'étanchéité (16, 17) limitant radialement la chambre de pression pour attaquer le piston pilote (4).

8. Système selon l'une des revendications précédentes,
**caractérisé en ce que** le piston pilote (4) est entouré, dans la région de la chambre de pression en forme de U (8), par une douille de soutien, afin, lors d'une attaque de la chambre de pression en forme de U (8), d'amener la direction d'action de la force de serrage radialement en direction de l'intérieur.

9. Système selon l'une des revendications précédentes,
**caractérisé en ce qu'**un tronçon de guidage (13), en forme de tenon et servant au guidage de la tige de piston (2), du boîtier de l'unité de vérin à fluide sous pression (5), est pourvu d'une bague de glissement rigide (14) afin de minimiser la friction entre le piston pilote (4) et le boîtier de l'unité de vérin à fluide sous pression (5) lors d'un mouvement axial du piston pilote (4).

10. Système selon l'une des revendications précédentes,
**caractérisé en ce que** le piston pilote (4) susceptible d'être attaqué par le fluide sous pression en direction d'avance peut être rappelé au moyen d'un élément à ressort (12) qui agit entre l'unité de vérin à fluide sous pression (5) et la douille de soutien (11) associée au piston pilote (4).

11. Amortisseur d'oscillation, en particulier à titre d'amortisseur de châssis d'une machine textile pour le bobinage de fil, comprenant un tube amortisseur (1) rempli de liquide, dans lequel un piston amortisseur qui comporte des traversées semblables à des étranglements pour l'amortissement, est guidé en déplacement axial, et depuis lequel sort une tige de piston (2), laquelle coopère avec un système selon l'une des revendications précédentes.

12. Amortisseur d'oscillation selon la revendication 10,
**caractérisé en ce que** l'unité de vérin à fluide sous pression (5) est agencée du côté frontal contre le tube amortisseur (1), et au voisinage d'un couvercle de vérin (6) traversé coaxialement de façon étanchée par la tige de piston (2).
